# FASCICULE DE BREVET EUROPEEN

(11) **EP 3 475 221 B1**
(45) Date de publication et mention de la délivrance du brevet: **14.10.2020**
(21) Numéro de dépôt: 17732104.9
(22) Date de dépôt: 22.06.2017
(51) Int. Cl.: C01B 25/22, C01B 25/231, C01B 25/32, C01F 11/46, C04B 11/26

(54) **PROCEDE DE PRODUCTION DE SULFATE DE CALCIUM**
VERFAHREN ZUR HERSTELLUNG VON CALCIUMSULFAT
METHOD FOR PRODUCING CALCIUM SULFATE

(30) Priorité: 23.06.2016 BE 201605463
(43) Date de publication de la demande: 01.05.2019
(73) Titulaire: Prayon Technologies, 4480 Engis (BE)
(72) Inventeur: HENRY, Thomas, 3870 Heers (BE); THEYS, Tibaut, 5340 Faux-les-Tombes (BE)
(74) Mandataire: Gevers Patents
(86) Numéro de dépôt international: PCT/EP2017/065371
(87) Numéro de publication internationale: WO 2017/220718

(56) Documents cités:
- EP-B1- 0 169 842
- WO-A1-2012/163425
- WO-A1-2015/082468

## Description

La présente invention est relative aux procédés de production de sulfate de calcium.

On connaît depuis longtemps divers procédés de production d'acide phosphorique par attaque sulfurique en voie humide de matières premières phosphatées, telles que des minerais de phosphate et diverses roches phosphatées. Ces procédés fournissent en abondance un sous-produit qui se présente sous la forme de sulfate de calcium. Selon les conditions appliquées pendant le procédé, on obtiendra, de manière connue, du sulfate de calcium sous la forme d'un dihydrate CaSO₄.2H₂O, appelé également gypse, d'un hémihydrate CaSO₄.1/2H₂O ou encore d'anhydrite CaSO_{4.} Ces produits secondaires sont généralement mal valorisés ou même non valorisables étant donné leur qualité insatisfaisante.

D'une manière générale, dans les procédés de production d'acide phosphorique par attaque sulfurique dite classique, on obtient, à côté d'un acide phosphorique ayant un rendement d'extraction de P₂O₅ peu performant, du gypse présentant un degré de pureté peu élevé et contenant notamment encore une quantité, inacceptable pour les plâtriers, de P₂O₅ dans les cristaux de gypse. Dans certaines exploitations de production on se débarrasse purement et simplement de ce gypse, notamment en le mettant en décharge.

Quand on obtient, en fin de procédé de production d'acide phosphorique, un gâteau de filtration à base d'hémihydrate de sulfate de calcium, celui-ci est généralement mis en tas de façon qu'il puisse se réhydrater par son eau d'imprégnation, ou même on le repulpe directement dans un milieu aqueux, et il passe ainsi à la forme de dihydrate de sulfate de calcium. Et ce gypse est alors utilisé dans diverses applications à faible valeur ajoutée, par exemple dans des ciments. Parfois même il est séché dans des conditions permettant d'obtenir à nouveau un hémihydrate, ce qui rend ce type de traitement particulièrement coûteux. Toutefois ce sulfate de calcium reste non utilisable dans des domaines exigeant un degré de pureté élevé, comme par exemple pour la fabrication de plaques de plâtre, les produits moulés etc.

Pour porter remède à cette situation, on a prévu de nombreux procédés permettant une épuration du sulfate de calcium finalement obtenu, par exemple par un processus de lavage soigneux du gâteau sorti du filtre, notamment par lixiviation de celui-ci par de l'acide sulfurique.

On connaît aussi des procédés de fabrication d'acide phosphorique passant en premier lieu par un stade de traitement de la roche de façon à en extraire un phosphate. Ces procédés comprennent
- une production de monohydrogénophosphate de calcium (DCP ou phosphate dicalcique) par
   - attaque en milieu aqueux d'une source de phosphate par un acide avec formation d'une pulpe comprenant une phase aqueuse contenant du phosphate de calcium soluble dans l'eau et une phase solide contenant des impuretés,
   - séparation de la phase aqueuse,
   - neutralisation de celle-ci par un composé de calcium neutralisant avec précipitation dudit monohydrogénophosphate de calcium dans une solution aqueuse, et
   - isolement du monohydrogénophosphate de calcium précipité à partir de cette solution aqueuse, et
- une digestion en milieu aqueux du monohydrogénophosphate de calcium isolé par de l'acide sulfurique dans des conditions donnant lieu à la formation d'une bouillie de cristaux de dihydrate de sulfate de calcium en suspension dans une phase aqueuse acide présentant une teneur en P₂O₅ libre (voir par exemple WO2010/043262, WO2015/082468, US2013970 et US4088738).

Le document WO2010/043262 divulgue un procédé de production d'acide phosphorique de très grande pureté qui est très complexe. Au cours d'une de ses nombreuses étapes, du monohydrogénophosphate de calcium est soumis à une attaque par de l'acide sulfurique en concentration très élevée dans la bouillie d'attaque et dans des conditions qui donnent lieu à un acide phosphorique peu concentré à ce stade et à du gypse qui est immédiatement écarté.

Le procédé suivant la demande de brevet WO2015/082468 concerne la production de phosphates destinés à l'agriculture ou l'alimentation. On y prévoit une étape de digestion de monohydrogénophosphate de calcium donnant lieu à la formation de dihydrate de sulfate de calcium. Soit celui-ci est produit directement à la digestion, c'est-à-dire avec une teneur insatisfaisante en P₂O₅ cocristallisé dans les cristaux de gypse, soit il provient d'hémihydrate de sulfate de calcium, obtenu au cours de la digestion, lequel est converti immédiatement en gypse. Cette conversion est effectuée par traitement de l'hémihydrate par de l'acide chlorhydrique ou éventuellement sulfurique, ce qui occasionne une consommation en acide élevée et l'obtention d'un sulfate de calcium présentant une acidité élevée, non souhaitable. Il est par ailleurs connu que les procédés effectués dans des conditions donnant lieu à une production d'hémihydrate au cours de l'attaque sulfurique ont un faible rendement d'extraction de P₂O₅, qui est inférieur à ceux obtenus par les procédés d'attaque sulfurique classiques.

Le procédé suivant le brevet US2013970 divulgue un procédé de préparation d'acide phosphorique, tel que décrit ci-dessus, qui présente les inconvénients d'une encapsulation importante de P₂O₅ dans les cristaux de gypse formés au cours de l'attaque sulfurique, ce qui rend celui-ci inutilisable pour les plâtriers.

Le procédé suivant le brevet US4088738 comprend une attaque très complexe de monohydrogénophosphate de calcium par un mélange très dilué d'acide phosphorique et d'acide sulfurique avec une répétition d'étapes. Dans le milieu liquide formé par ce mélange on introduit, par portions, le monohydrogénophosphate de calcium préalablement préparé, on retire régulièrement une partie de ce mélange, qu'on filtre, et on recycle l'acide phosphorique obtenu dans le milieu liquide, tandis qu'on ajoute au mélange de petites portions successives d'acide sulfurique. Ces opérations sont répétées jusqu'à l'obtention d'un acide phosphorique concentré. La matière solide filtrée est constituée de gypse.

Tous ces procédés selon la technique antérieure permettent, à un moment donné de leur processus, la production de gypse qui est un produit peu valorisable directement. Par ailleurs ces quatre procédés font une consommation importante d'acide, en particulier sulfurique, qui grève le coût industriel et entraîne des soucis de corrosion des équipements utilisés.

En fait, il existe un besoin, chez les plâtriers, de sulfate de calcium non seulement d'un grand degré de pureté, mais aussi présentant des qualités permettant son usage dans des domaines précis, comme la réalisation de plaques de plâtre, le moulage de plâtre, ou des applications nécessitant un matériau à grande résistance mécanique. Les propriétés à atteindre sont notamment la résistance à la compression, la résistance à la flexion, ainsi que la durée de prise. Pour ces applications les plâtriers font usage d'un sulfate de calcium particulier, l'hémihydrate de sulfate de calcium de type a.

La présente invention a par conséquent pour but de mettre au point un procédé de production d'hémihydrate de sulfate de calcium de type α qui soit de grande pureté chimiquement et qui soit immédiatement utilisable par les plâtriers, notamment pour la fabrication de produits présentant un haut degré de pureté et de bonnes qualités de prise et de résistance mécanique. Il est requis que l'obtention d'un tel sulfate n'influe pas de manière désavantageuse sur la production conjointe de l'acide phosphorique et en particulier sur le rendement d'extraction du P₂O₅ au cours de l'attaque de la matière phosphatée.

On a résolu ce problème en prévoyant un procédé de préparation de sulfate de calcium comprenant
- une production de monohydrogénophosphate de calcium par
   - attaque en milieu aqueux d'une source de phosphate par un acide avec formation d'une pulpe comprenant une phase aqueuse contenant du phosphate de calcium soluble dans l'eau et une phase solide contenant des impuretés,
   - séparation de la phase aqueuse,
   - neutralisation de celle-ci par un composé de calcium neutralisant avec précipitation dudit monohydrogénophosphate de calcium dans une solution aqueuse, et
   - isolement du monohydrogénophosphate de calcium précipité à partir de cette solution aqueuse, et
- une digestion en milieu aqueux du monohydrogénophosphate de calcium isolé par de l'acide sulfurique dans des conditions donnant lieu à la formation d'une première bouillie de cristaux de dihydrate de sulfate de calcium en suspension dans une phase aqueuse acide présentant une teneur en P₂O₅ libre.

Suivant l'invention, la digestion est effectuée à une température supérieure à 65°C et inférieure à 75°C, à une teneur en P₂O₅ libre dans la phase aqueuse acide de 30-38% en poids de la première bouillie et à une teneur en SO₃ libre dans cette phase aqueuse acide supérieure à 0.5% et égale ou inférieure à 1,5% en poids de la première bouillie, et le procédé comprend en outre
- une conversion d'au moins une partie de ladite première bouillie par chauffage à une température supérieure à 80°C et ajout éventuel d'acide sulfurique, avec solubilisation des cristaux de dihydrate de sulfate de calcium et recristallisation du sulfate de calcium solubilisé donnant lieu à une seconde bouillie de cristaux de hémihydrate de sulfate de calcium de type α en suspension dans une phase aqueuse à base d'acide phosphorique, dans laquelle la teneur en SO₃ libre est inférieure à 10% en poids, de préférence inférieure à 8% en poids, en particulier inférieure à 5% en poids, de la première bouillie, et
- une séparation, dans cette seconde bouillie, entre la phase aqueuse à base d'acide phosphorique et un gâteau de filtration à base d'hémihydrate de sulfate de calcium de type a.

Ce procédé présente l'avantage de simultanément procéder à l'étape de digestion sulfurique sur une matière phosphatée déjà débarrassée de nombreuses impuretés et d'obtenir un rendement d'extraction de P₂O₅ performant. En effet lors de la conversion le P₂O₅ cocristallisé dans les cristaux de gypse est récupéré, ce qui donne lieu à un sulfate de calcium présentant une teneur en P₂O₅ inférieure à 0,6% en poids. Les conditions de la conversion sont telles qu'on obtient un hémihydrate de sulfate de calcium de type a, le produit final recherché. Celui-ci ne nécessite plus d'épuration ultérieure.

Avantageusement, ce procédé comprend en outre une étape de séchage et de broyage du hémihydrate de sulfate de calcium de type α séparé. Ainsi, celui-ci peut, après séchage et broyage à la granulation demandée, être directement utilisé par les plâtriers.

La source de phosphate du procédé suivant l'invention peut être toute matière contenant une teneur substantielle de P₂O₅ comme, par exemple, un minerai de phosphate, une roche phosphatée, des cendres, une boue de station d'épuration, des os, du lisier de porc, leurs mélanges et analogues.

L'acide prévu pour l'attaque en milieu aqueux de la source de phosphate peut être de l'acide phosphorique, de l'acide chlorhydrique, de l'acide nitrique, de l'acide sulfurique, ou leurs mélanges. La phase solide séparée de la pulpe contient un grand nombre d'impuretés métalliques, en particulier des métaux lourds, des éléments radioactifs ou des matières inertes insolubles. La phase aqueuse séparée de la pulpe contient du phosphate de calcium soluble dans l'eau, à savoir du dihydrogénophosphate de calcium (MCP ou phosphate monocalcique) ainsi que des sels solubles qui sont fonction du ou des acides utilisés, comme par exemple du chlorure de calcium, du nitrate de calcium, et analogues.

Le composé de calcium neutralisant servant à la neutralisation de la phase aqueuse contenant du phosphate de calcium soluble dans l'eau est avantageusement de la chaux sous forme vive ou éteinte, du carbonate de calcium ou un autre sel de calcium ayant un effet de neutralisation. La neutralisation est avantageusement réalisée à un pH choisi de façon que le monohydrogénophosphate de calcium précipite, tandis que les sels du ou des acides appliqués restent en solution. Avantageusement ce pH est de l'ordre de 2,5 à 4.

L'hémihydrate de sulfate de calcium de type a obtenu dans le gâteau de filtration final comporte une eau d'imprégnation de l'ordre de 10 à 25% en poids. L'hémihydrate doit alors avantageusement être séché directement de manière à empêcher toute réhydratation sous forme de dihydrate. Avantageusement le sulfate de calcium de type α présente après séchage une teneur en eau de cristallisation comprise entre 6,2% et 1,5% en poids. Préférentiellement, la teneur en eau de l'hémihydrate de sulfate de calcium obtenu après séchage est de 6,2%.

Le broyage du hémihydrate de sulfate de calcium de type α ainsi séché est effectué en fonction des propriétés de vitesse de prise ou de résistance mécanique souhaitées par l'utilisateur. Le broyage et le séchage peuvent avoir lieu simultanément ou séparément. Si l' hémihydrate de sulfate de calcium de type α produit présente une acidité résiduaire, il est souhaitable de neutraliser celle-ci, notamment par addition d'un agent neutralisant, tel que de l'oxyde, de l'hydroxyde ou du carbonate de calcium, ou leurs mélanges. Des additifs nécessaires à la fabrication du plâtre peuvent aussi être ajoutés à ce sulfate de calcium.

Suivant l'invention la digestion est effectuée dans des conditions donnant lieu à la formation de gypse dans la première bouillie. Selon ces conditions, la première bouillie présente une teneur en SO₃ libre égale ou inférieure à 1,5% en poids, ce qui est une teneur avantageusement faible.

Suivant l'invention, la digestion par de l'acide sulfurique est effectuée à une température supérieure à 65°C et inférieure à 75°C, de préférence de l'ordre de 70°C, à une teneur en P₂O₅ libre dans la phase aqueuse acide de 30-38% en poids de la première bouillie et à une teneur en SO₃ libre dans cette phase aqueuse acide supérieure à 0,5% en poids de la première bouillie, de préférence comprise entre 0,8 et 1,2% en poids, avantageusement de l'ordre de 1% en poids. Dans ces conditions le sulfate de calcium obtenu est constitué de gypse qui s'est cristallisé en encapsulant simultanément des valeurs de P₂O₅ inacceptables pour les plâtriers. Ce P₂O₅ est libéré au cours de l'étape de conversion, où il se produit une solubilisation du gypse, et l'hémihydrate cristallisé dans la seconde bouillie peut ainsi présenter une teneur en P₂O₅ inférieure à 0,6% en poids.

Dans un tel mode de réalisation, le procédé peut comprendre en outre, avant ladite conversion,
- une division de la première bouillie en une première fraction et une deuxième fraction, et
- une filtration de la première fraction avec séparation, comme filtrat, d'acide phosphorique de production et, comme gâteau de filtration, de dihydrate de sulfate de calcium, qui est mélangé à ladite deuxième fraction pour être soumis à ladite conversion,
ladite conversion étant effectuée à une température de 85 à 90°C, avec un ajout d'acide sulfurique, de façon à obtenir, dans la phase aqueuse à base d'acide phosphorique de la seconde bouillie, une teneur en SO₃ libre supérieure à 2% en poids de la seconde bouillie, de préférence comprise entre 5 et 6,5% en poids.

Ce mode de réalisation comporte donc une filtration après chacune des étapes de digestion et de conversion. Le gypse formant le gâteau de la première filtration est introduit dans la fraction de la bouillie non filtrée qui est soumise à la conversion et donc la totalité du sulfate de calcium séparé au cours de ce processus est sous la forme d'un hémihydrate de sulfate de calcium de type α pur et immédiatement utilisable par les plâtriers, de préférence après un simple séchage et un broyage à la granulométrie recherchée. D'autre part l'acide phosphorique filtré au cours de la première filtration est un acide de production de bonne qualité. De préférence, la phase aqueuse à base d'acide phosphorique séparée du gâteau de filtration à base de de hémihydrate de sulfate de calcium de type α est recyclée à l'étape de digestion susdite. Elle consiste en un mélange d'acide phosphorique et d'acide sulfurique parfaitement utilisable dans l'étape de digestion.

Suivant un mode de réalisation, la digestion est effectuée à une température comprise entre 70°C et 90°C, à une teneur en P₂O₅ libre dans la phase aqueuse acide de 38 à 50% en poids de la première bouillie et à une teneur en SO₃ libre dans la phase aqueuse acide inférieure à 0,5% en poids et supérieure à 0,05% en poids de la première bouillie. Dans ces conditions de température et de concentration en P₂O₅, on devrait normalement obtenir un hémihydrate. D'une manière avantageuse, par alimentation en acide sulfurique au cours de la digestion dans des proportions quasi stoechiométriques on obtient encore du dihydrate de sulfate de calcium.

De manière préférentielle, dans ce dernier mode de réalisation, la conversion est effectuée sur la totalité de ladite première bouillie à une température égale ou supérieure à 90°C, de façon à obtenir, dans la phase aqueuse à base d'acide phosphorique de la seconde bouillie, une teneur en P₂O₅ libre de 35 à 45% en poids et une teneur en SO₃ libre inférieure à 2% en poids, de préférence inférieure à 1,0 % en poids, et supérieure à 0,1% en poids, par rapport au poids de la seconde bouillie, la phase aqueuse à base d'acide phosphorique étant, après ladite séparation, un acide phosphorique de production. Le gâteau de l'unique filtration succédant à la conversion est un hémihydrate de sulfate de calcium de type α très pur, qui est directement utilisable, en particulier après séchage et broyage à la granulométrie souhaitée.

Il faut remarquer que, dans ce mode de réalisation, il peut être prévu d'ajouter un tout petit peu d'acide sulfurique au cours de la conversion. Il est aussi possible que l'étape de conversion ne comprenne pas un tel ajout. De toute manière, la consommation en acide sulfurique de ce mode de réalisation du procédé suivant l'invention est particulièrement peu élevée.

Pour certaines applications, on peut également envisager que le procédé suivant l'invention comprenne en outre une maturation de l'hémihydrate de sulfate de calcium de type α séparé de manière à fournir un dihydrate de sulfate de calcium de type β. L'hémihydrate de sulfate de calcium de type α mis en tas se réhydrate progressivement et le gypse β ainsi obtenu peut alors être séché.

D'autres détails et particularités de l'invention sont à dégager des revendications annexées.

Le procédé suivant l'invention va à présent être décrit de manière plus détaillée, en faisant référence aux dessins annexés.

Sur les différentes figures les éléments identiques ou analogues portent les mêmes références.

La figure 1 représente, sous la forme d'un schéma d'écoulement, un exemple d'installation mettant en œuvre un mode de réalisation de procédé suivant l'invention.

La figure 2 représente d'une même manière une installation mettant en œuvre un autre mode de réalisation de procédé suivant l'invention.

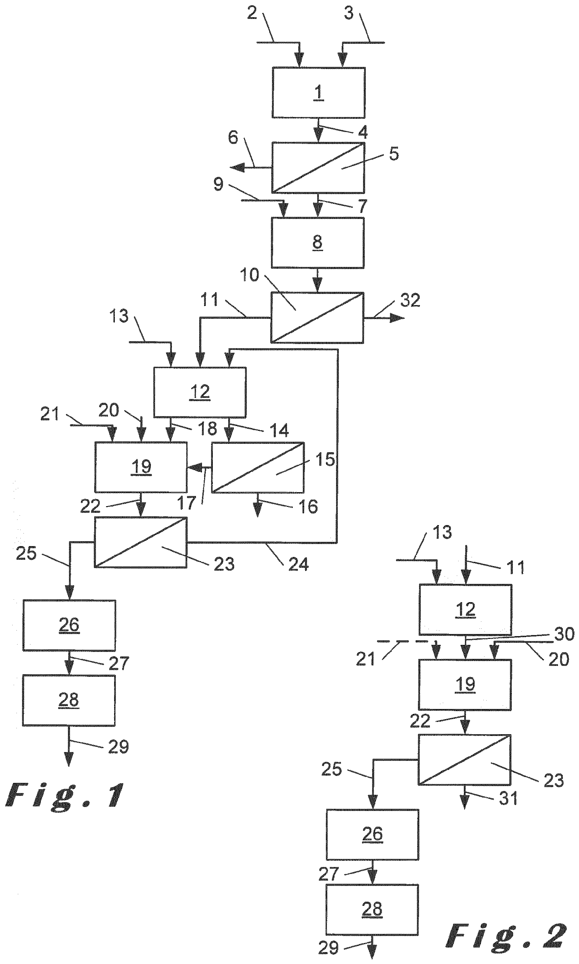

L'installation illustrée sur la figure 1 comprend un réacteur d'attaque 1 dans lequel on introduit en 2 de la roche phosphatée broyée et en 3 un acide fort, par exemple de l'acide chlorhydrique. Les conditions appliquées dans ce réacteur sont les suivantes :
Température : 50-70°C
Temps de séjour : <1 heure

La pulpe 4 obtenue dans le réacteur 1 est formée d'une phase aqueuse, dans laquelle sont dissous du dihydrogénophosphate de calcium (MCP) et du chlorure de calcium, et d'une phase solide contenant des impuretés métalliques et des éléments radioactifs présents dans la roche. Ces deux phases sont séparées dans un dispositif de filtration 5. Les impuretés sont écartées en 6, tandis que la phase aqueuse 7 est neutralisée dans une cuve 8 par l'alimentation dans celle-ci d'un agent basique 9, par exemple du carbonate de calcium. Cette introduction est réglée de façon à augmenter le pH jusqu'à une valeur comprise de préférence entre 2,5 et 3,0. Il se produit alors une précipitation de monohydrogénophosphate de calcium (DCP) tandis que d'autres sels, comme le chlorure de calcium, restent à l'état dissous. La suspension obtenue est alors transférée à un dispositif de fitration 10 qui permet d'isoler, sous forme solide, le monohydrogénophosphate de calcium 11 d'une solution aqueuse de chlorure de calcium 32 qui est écartée pour être utilisée dans d'autres traitements ou en vue d'un recyclage.

Le monohydrogénophosphate de calcium est alors introduit dans un réacteur de digestion 12 où il est soumis à l'action d'acide sulfurique alimenté en 13, par exemple de l'acide sulfurique concentré à 98-99% en poids. Cette réaction est exothermique et ne nécessite pas d'apport de calories, mais simplement un réglage thermique du réacteur par des moyens connus en soi.

Les conditions opératoires appliquées dans ce réacteur sont les suivantes :
Température : >65-<75°C, de préférence 70°C
% P₂O₅ libre : 30-38% en poids
%SO₃ libre : >0,5%-1,5% en poids, de préférence 0,8-1,2%, en particulier 1,0% en poids
Temps de séjour : 2-4 h, de préférence 3 h.

Dans ces conditions il se forme une bouillie de gypse dans une phase aqueuse acide présentant une teneur significative en P₂O₅ libre. Une première fraction 14 de cette bouillie est transférée à un dispositif de filtration 15. Le filtrat obtenu 16 est un acide phosphorique de production de bonne qualité et le gâteau de filtration 17 formé de gypse est amené, comme la seconde fraction 18 de la bouillie issue de la digestion, à une cuve de conversion 19. Dans cette cuve la température est augmentée de manière connue, par exemple par apport de vapeur d'eau en 20, et on fournit au milieu réactionnel un petit supplément d'acide sulfurique en 21.

Les conditions opératoires appliquées dans la cuve de conversion sont les suivantes :
Température : >80°C, de préférence 85-90°C
% P₂O₅ libre : 24-32% en poids
%SO₃ libre : 2-10% en poids, de préférence 5-8,0% en poids
Temps de séjour : 45 à 90 min., de préférence 60 min.

Dans ces conditions le dihydrate de sulfate de calcium se solubilise, libère les valeurs de P₂O₅ qu'il contient et se recristallise sous la forme d'un hémihydrate de sulfate de calcium de type α particulièrement pur et aisément filtrable, qui ne présente plus qu'une teneur extrêmement faible en P₂O₅.

La seconde bouillie ainsi formée 22 est alors transférée à un dispositif de filtration 23. Le filtrat 24, formé d'un mélange d'acide phosphorique et d'acide sulfurique, peut être recyclé au réacteur de digestion 12. Le gâteau de filtration formé d'hémihydrate de sulfate de calcium de type α encore imprégné d'eau peut être immédiatement transféré en 25 à un dispositif de séchage 26, où il est séché de façon qu'il ne contienne avantageusement pas plus de 6,2% d'eau de cristallisation, ce qui ne lui permet plus une réhydratation. L'hémihydrate séché est ensuite convoyé en 27 vers un dispositif de broyage 28 (par exemple un broyeur à aiguilles), à partir duquel le produit broyé à la granulométrie souhaitée peut être transféré en 29 vers des applications où il peut être directement mis en œuvre, éventuellement avec différents additifs appropriés, pour réaliser des produits à propriétés mécaniques particulièrement développées.

Avantageusement, les étapes de séchage en 26 et de broyage en 28 peuvent être réalisées simultanément dans un sécheur-broyeur, auquel cas aucun dispositif de convoyage 27 n'est nécessaire.

Il doit être entendu que ce procédé qui est représenté comme effectué d'une traite peut faire l'objet de stockages intermédiaires avant de le poursuivre. Par exemple le DCP isolé peut être stocké avant d'être mis en œuvre dans la digestion.

La figure 2 illustre un procédé qui, après l'isolement de DCP, se déroule d'une manière alternative. La partie du procédé précédant le réacteur de digestion 12 peut donc être prélevée de la figure 1.

Dans cet exemple de réalisation les conditions opératoires dans le réacteur de digestion 12 sont les suivantes :
Température : 70-90°C, de préférence 70-80°C
% P₂O₅ libre : 38%-50% en poids
% SO₃ libre : 0,05%-<0,5% en poids
Temps de séjour : 2-4 h.

La bouillie de gypse étonnamment formée dans ces conditions n'est pas filtrée et est transférée dans sa totalité en 30 à la cuve de conversion 19.

Celle-ci est chauffée, par exemple à l'aide de vapeur d'eau, en 20 et un ajout éventuel, mais non absolument nécessaire, d'une faible quantité d'acide sulfurique est effectué en 21. Les conditions opératoires dans la cuve de conversion 19 sont les suivantes :
Température : >90°C, de préférence 90-105°C
% P₂O₅ libre : 35%-45% en poids
% SO₃ libre: <2% en poids, de préférence 0,1-<1,0% en poids
Temps de séjour : 0,5-1,5h.

On obtient ainsi une seconde bouillie 22 d' hémihydrate de sulfate de calcium de type α qui va être transférée dans un dispositif de filtration 23. Le filtrat 31 est un acide phosphorique de très bonne qualité, à forte teneur en P₂O₅, qui est l'acide de production. Le gâteau de filtration 25 imprégné d'eau est, comme dans le premier exemple de réalisation, séché, puis broyé pour donner du hémihydrate de sulfate de calcium de type α prêt à l'usage.

### Exemple.

De l'hémihydrate de sulfate de calcium de type α a été préparé dans les conditions opératoires du procédé illustré sur la figure 1.

Une analyse chimique de deux échantillons secs a été entreprise, qui est résumée dans le tableau 1 suivant :

**Tableau 1**

| Analyses à 250°C | Echantillon 1 | Echantillon 2 |
|---|---|---|
| P₂O₅, % | 0,18 | 0,19 |
| CaO, % | 41,48 | 41,16 |
| Al₂O₃, % | 0,0364 | 0,0763 |
| F, % | 0,1188 | 0,0626 |
| SiO₂, % | 0,1550 | 0,1575 |
| Fe₂O₃, % | 0,0189 | 0,0187 |
| MgO, % | <0,0050 | <0,0050 |
| Na₂O, % | 0,0406 | 0,0468 |
| K₂O, % | 0,0563 | 0,1006 |
| Th, ppm | <6,1500 | <6,2500 |
| Sr, % | 0,0332 | 0,0525 |
| Ti, ppm | 22,5092 | 41,0467 |
| U₃O₈, ppm | 12,6691 | <1,250 |
| Cd, ppm | <0,615 | <0,625 |
| As, ppm | 3,5670 | 0,3044 |
| Pb, ppm | 148,4894 | 160,0000 |
| Hg, ppm | <0,123 | <0,125 |
| Total C, ppm | 84,8708 | 85,0000 |

Il ressort de ce tableau que l'hémihydrate de sulfate de calcium α produit est particulièrement pur, en particulier pour un usage par des plâtriers.

Comme on peut le constater, cet hémihydrate de sulfate de calcium présente une teneur extrêmement faible en P₂O₅, ce qui est une exigence primordiale des plâtriers. En effet le P₂O₅ est un élément perturbateur du temps de prise des ciments et des plâtres.

D'autre part, on peut constater une teneur résiduelle en Na₂O largement inférieure à 1.500 ppm, même à 500 ppm, ce qui est particulièrement avantageux pour une utilisation de sulfate de calcium dans les plaques de plâtre. Effectivement le Na₂O présente l'inconvénient de provoquer une efflorescence du sulfate de calcium après pose.

Par la suite des tests de résistance à la flexion ont été effectués selon le protocole suivant :
Des échantillons du hémihydrate analysé ci-dessus ont été réhydratés en vue de préparer du plâtre (rapport eau/sulfate de calcium ∼ 0,34). Le plâtre ainsi formé est versé dans des moules en forme de parallélépipèdes rectangles (3,9 x 3, 9 x 16,2 cm). Une fois solidifiées, les éprouvettes de plâtre sont enlevées des moules et soumises à un test de résistance à la flexion. Chaque éprouvette en forme de barre est placée sur trois points d'appui et un effort est appliqué sur le point central. L'effort est augmenté progressivement jusqu'à la rupture de l'éprouvette.

Ces essais de résistance à la flexion ont été effectués après différentes périodes de temps après solidification et démoulage.

**Tableau 2**

| | | | |
|---|---|---|---|
| Temps après démoulage (jours) | 1 | 7 | 21 |
| Résistance à la flexion (MPa) | 4,81 | 6,08 | 6,37 |

Ces résultats montrent donc un hémihydrate de sulfate de calcium présentant une résistance à la flexion de plus de 2,5 MPa, avantageusement de plus de 4 MPa.

Dans des essais de résistance à la compression des échantillons ont aussi montré une résistance supérieure à 5 MPa , avantageusement de plus de 10 MPa.

Il doit être entendu que la présente invention n'est en aucune façon limitée à l'exemple de réalisation donné ci-dessus et que bien des modifications peuvent être apportées sans sortir du cadre des revendications annexées.

## Revendications

1. Procédé de préparation de sulfate de calcium comprenant
- une production de monohydrogénophosphate de calcium par
• attaque en milieu aqueux d'une source de phosphate par un acide avec formation d'une pulpe comprenant une phase aqueuse contenant du phosphate de calcium soluble dans l'eau et une phase solide contenant des impuretés,
• séparation de la phase aqueuse,
• neutralisation de celle-ci par un composé de calcium neutralisant avec précipitation dudit monohydrogénophosphate de calcium dans une solution aqueuse, et
• isolement du monohydrogénophosphate de calcium précipité à partir de cette solution aqueuse, et
- une digestion en milieu aqueux du monohydrogénophosphate de calcium isolé par de l'acide sulfurique dans des conditions donnant lieu à la formation d'une première bouillie de cristaux de dihydrate de sulfate de calcium en suspension dans une phase aqueuse acide présentant une teneur en P₂O₅ libre,
**caractérisé en ce que** la digestion est effectuée à une température supérieure à 65°C et inférieure à 75°C, à une teneur en P₂O₅ libre dans la phase aqueuse acide de 30-38% en poids de la première bouillie et à une teneur en SO₃ libre dans cette phase aqueuse acide supérieure à 0,5% en poids de la première bouillie, et égale ou inférieure à 1,5% en poids de la première bouillie, et
**en ce que** le procédé comprend en outre
- une conversion d'au moins une partie de ladite première bouillie par chauffage à une température supérieure à 80°C et ajout éventuel d'acide sulfurique, avec solubilisation des cristaux de dihydrate de sulfate de calcium et recristallisation du sulfate de calcium solubilisé donnant lieu à une seconde bouillie de cristaux de hémihydrate de sulfate de calcium de type α en suspension dans une phase aqueuse à base d'acide phosphorique, dans laquelle la teneur en SO₃ libre est inférieure à 10% en poids de la seconde bouillie, et
- une séparation, dans cette seconde bouillie, entre la phase aqueuse à base d'acide phosphorique et un gâteau de filtration à base de hémihydrate de sulfate de calcium de type a.

2. Procédé de préparation de sulfate de calcium suivant la revendication 1, comprenant en outre une étape de séchage et de broyage du hémihydrate de sulfate de calcium de type α séparé.

3. Procédé suivant la revendication 2, **caractérisé en ce que** le hémihydrate de sulfate de calcium de type α séché présente une teneur en eau de cristallisation comprise entre 6,2% et 1,5% en poids.

4. Procédé suivant l'une ou l'autre des revendications 2 ou 3, **caractérisé en ce que** le broyage et le séchage du hémihydrate de sulfate de calcium de type α séparé ont lieu simultanément ou séparément.

5. Procédé suivant l'une des revendications 2 à 4, **caractérisé en ce que** l'hémihydrate de sulfate de calcium de type α séparé présente une acidité résiduaire et **en ce que** le procédé comprend en outre une neutralisation de cette acidité résiduaire.

6. Procédé suivant l'une quelconque des revendications 1 à 5, **caractérisé en ce que** la teneur en SO₃ libre dans la phase aqueuse à base d'acide phosphorique de l'étape de conversion est inférieure à 8% en poids, de préférence à 5% en poids de la seconde bouillie.

7. Procédé suivant l'une quelconque des revendications 1 à 6, **caractérisé en ce que** la source de phosphate est un minerai de phosphate, une roche phosphatée, des cendres, une boue de station d'épuration, des os, du lisier de porc ou leur mélange.

8. Procédé suivant l'une quelconque des revendications 1 à 7, **caractérisé en ce qu'**il comprend en outre, avant ladite conversion,
- une division de la première bouillie en une première fraction et une deuxième fraction, et
- une filtration de la première fraction avec séparation, comme filtrat, d'acide phosphorique de production et, comme gâteau de filtration, de dihydrate de sulfate de calcium, qui est mélangé à ladite deuxième fraction pour être soumis à ladite conversion,
et **en ce que** ladite conversion est effectuée à une température de 85 à 90°C, avec un ajout d'acide sulfurique, de façon à obtenir, dans la phase aqueuse à base d'acide phosphorique de la seconde bouillie, une teneur en SO₃ libre supérieure à 2% en poids de la seconde bouillie.

9. Procédé suivant la revendication 8, **caractérisé en ce que** ladite phase aqueuse à base d'acide phosphorique séparée du gâteau de filtration à base de hémihydrate de sulfate de calcium de type α est recyclée à l'étape de digestion susdite.

10. Procédé suivant l'une quelconque des revendications 1 et 6 à 9, **caractérisé en ce qu'**il comprend en outre une maturation de l'hémihydrate de sulfate de calcium de type α séparé de manière à fournir un dihydrate de sulfate de calcium de type β.

11. Procédé suivant l'une quelconque des revendications 1 à 10, **caractérisé en ce que** la digestion et la conversion ont lieu dans des réacteurs séparés.

## Patentansprüche

1. Verfahren zur Herstellung von Calciumsulfat, umfassend
- eine Produktion von Calciummonohydrogenphosphat durch
• Aufschließen im wässrigen Milieu einer Phosphatquelle durch eine Säure samt Bildung einer Pulpe, die eine wässrige Phase umfasst, die in Wasser lösliches Calciumphosphat und eine feste Phase enthält, die Verunreinigungen enthält,
• Abscheiden der wässrigen Phase,
• Neutralisieren derselben durch eine neutralisierende Calciumzusammensetzung, mit Ausfällen des Calciummonohydrogenphosphats in einer wässrigen Lösung, und
• Isolieren von aus dieser wässrigen Lösung ausgefälltem Calciummonohydrogenphosphat, und
- eine Faulung im wässrigen Milieu von durch Schwefelsäure isoliertem Calciummonohydrogenphosphat unter Bedingungen, die die Bildung eines ersten Breis von Calciumsulfat-Dihydrat-Kristallen in Suspension in einer sauren wässrigen Phase ergibt, die einen Gehalt an freiem P₂O₅ aufweist,
**dadurch gekennzeichnet, dass** die Faulung bei einer Temperatur von über 65 °C und unter 75 °C mit einem Gehalt an freiem P₂O₅ in der sauren wässrigen Phase von 30-38 Gew.-% des ersten Breis und mit einem Gehalt an freiem SO₃ in dieser sauren wässrigen Phase von mehr als 0,5 Gew.-% des ersten Breis, und gleich oder kleiner als 1,5 Gew.-% des ersten Breis durchgeführt wird, und
dadurch, dass das Verfahren weiter umfasst
- eine Umwandlung mindestens eines Teils des ersten Breis durch Erhitzen auf eine Temperatur von über 80 °C und eventuelle Beigabe von Schwefelsäure samt Solubilisierung der Calciumsulfat-Dihydrat-Kristalle und Rekristallisation des solubilisierten Calciumsulfats, was einen zweiten Brei an Calciumsulfat-Hemihydrat-Kristallen des Typs α in Suspension in einer wässrigen Phase auf Phosphorsäurebasis ergibt, in der der Gehalt an freiem SO₃ geringer als 10 Gew.-% des zweiten Breis ist, und
- eine Abscheidung in diesem zweiten Brei zwischen der wässrigen Phase auf Phosphorsäurebasis und einem Filterkuchen auf Basis von Calciumsulfat-Hemihydrat des Typs α.

2. Verfahren zur Herstellung von Calciumsulfat nach Anspruch 1, weiter umfassend einen Schritt des Trocknens und des Zerkleinerns des abgeschiedenen Calciumsulfat-Hemihydrats des Typs α.

3. Verfahren nach Anspruch 2, **dadurch gekennzeichnet, dass** das getrocknete Calciumsulfat-Hemihydrat des Typs α einen Kristallisationswassergehalt zwischen 6,2 Gew.-% und 1,5 Gew.-% aufweist.

4. Verfahren nach einem der Ansprüche 2 oder 3, **dadurch gekennzeichnet, dass** das Zerkleinern und das Trocknen des abgeschiedenen Calciumsulfat-Hemihydrats des Typs α gleichzeitig oder getrennt stattfinden.

5. Verfahren nach einem der Ansprüche 2 bis 4, **dadurch gekennzeichnet, dass** das abgeschiedene Calciumsulfat-Hemihydrat des Typs α einen Restsäuregehalt aufweist und dadurch, dass das Verfahren weiter eine Neutralisierung dieses Restsäuregehalts umfasst.

6. Verfahren nach einem der Ansprüche 1 bis 5, **dadurch gekennzeichnet, dass** der Gehalt an freiem SO₃ in der wässrigen Phase auf Phosphorsäurebasis des Umwandlungsschrittes geringer als 8 Gew.-%, vorzugsweise als 5 Gew.-% des zweiten Breis ist.

7. Verfahren nach einem der Ansprüche 1 bis 6, **dadurch gekennzeichnet, dass** die Phosphatquelle ein Phosphaterz, ein Phosphorit, Asche, Klärschlamm, Knochen, Schweinegülle oder deren Gemisch ist.

8. Verfahren nach einem der Ansprüche 1 bis 7, **dadurch gekennzeichnet, dass** es weiter vor der Umwandlung Folgendes umfasst
- eine Teilung des ersten Breis in eine erste Fraktion und eine zweite Fraktion, und
- eine Filterung der ersten Fraktion samt Abscheidung, als Filtrat, von Phosphorsäure aus der Herstellung, und als Filterkuchen, von Calciumsulfat-Dihydrat, das mit der zweiten Fraktion vermischt wird, um der Umwandlung unterzogen zu werden,
und dadurch, dass die Umwandlung bei einer Temperatur von 85 bis 90 °C mit einer Beigabe von Schwefelsäure durchgeführt wird, so dass in der wässrigen Phase auf Phosphorsäurebasis des zweiten Breis ein Gehalt an freiem SO₃ von mehr als 2 Gew.-% des zweiten Breis erhalten wird.

9. Verfahren nach Anspruch 8, **dadurch gekennzeichnet, dass** die wässrige Phase auf Phosphorsäurebasis, die von dem Filterkuchen auf Basis von Calciumsulfat-Hemihydrat des Typs a abgeschieden wird, im zuvor genannten Faulungsschritt recycelt wird.

10. Verfahren nach einem der Ansprüche 1 und 6 bis 9, **dadurch gekennzeichnet, dass** es weiter eine Reifung des abgeschiedenen Calciumsulfat-Hemihydrats des Typs α derart umfasst, dass ein Calciumsulfat-Dihydrat des Typs β bereitgestellt wird.

11. Verfahren nach einem der Ansprüche 1 bis 10, **dadurch gekennzeichnet, dass** die Faulung und die Umwandlung in getrennten Reaktoren stattfinden.

## Claims

1. A process for preparing calcium sulphate comprising
- producing dicalcium phosphate by
• attacking in aqueous medium a phosphate source with an acid with the formation of a pulp comprising an aqueous phase containing watersoluble calcium phosphate and a solid phase containing impurities,
• separating the aqueous phase,
• neutralising the latter with a neutralizing calcium compound with precipitation of said dicalcium phosphate in an aqueous solution, and
• isolating the precipitated dicalcium phosphate from this aqueous solution, and
- digesting in an aqueous medium of isolated dicalcium phosphate by sulphuric acid under conditions resulting in the formation of a first slurry of calcium sulphate dihydrate crystals in suspension in an acidic aqueous phase having a free P₂O₅ content,
**characterized in that** the digestion is carried out at a temperature above 65°C and below 75°C, at a content of free P₂O₅ in the acidic aqueous phase of 30-38% by weight of the first slurry and a content of free SO₃ in this acidic aqueous phase of more than 0.5% by weight of the first slurry and equal to or less than 1.5% by weight of the first slurry, and
**in that** the process further comprises
- converting at least a part of said first slurry by heating to a temperature above 80°C and optionally adding sulphuric acid, with solubilization of the calcium sulphate dihydrate crystals and recrystallization of the solubilized calcium sulphate resulting in a second slurry of α-type calcium sulphate hemihydrate crystals in suspension in an aqueous phase based on phosphoric acid, in which the content of free SO₃ is less than 10% by weight of the second slurry, and
- separating in this second slurry, between the aqueous phase based on phosphoric acid and a filter cake based on α-type calcium sulphate hemihydrate.

2. The process for preparing calcium sulphate according to claim 1, further comprising a step of drying and grinding the separated α-type calcium sulphate hemihydrate.

3. The process according to claim 2, **characterized in that** the dried α-type calcium sulphate hemihydrate has a water of crystallization content of between 6.2% and 1.5% by weight.

4. The process according to either of claims 2 or 3, **characterized in that** grinding and drying of the separated α-type calcium sulphate hemihydrate take place simultaneously or separately.

5. The process according to one of claims 2 to 4, **characterized in that** the separated α-type calcium sulphate hemihydrate has a residual acidity and **in that** the process further comprises a neutralization of this residual acidity.

6. The process according to any one of claims 1 to 5, **characterized in that** the content of free SO₃ in the aqueous phase based on phosphoric acid of the conversion step is less than 8% by weight, preferably less than 5% by weight of the second slurry.

7. The process according to any one of claims 1 to 6, **characterized in that** the phosphate source is a phosphate ore, phosphate rock, ash, sewage sludge, bones, pig manure or a mixture thereof.

8. The process according to any one of claims 1 to 7, **characterized in that** it further comprises, prior to said conversion,
- dividing the first slurry into a first fraction and a second fraction, and
- filtrating the first fraction with separation, as filtrate, of production phosphoric acid and, as filter cake, of calcium sulphate dihydrate, which is mixed with said second fraction to undergo said conversion,
and **in that** the said conversion is carried out at a temperature of 85 to 90°C, with the addition of sulphuric acid, so as to obtain, in the aqueous phase based on phosphoric acid of the second slurry, a free SO₃ content greater than 2% by weight of the second slurry.

9. The process according to claim 8, **characterized in that** said aqueous phase based on phosphoric acid separated from the filter cake based on α-type calcium sulphate hemihydrate is recycled at the above-mentioned digestion step.

10. The process according to any one of claims 1 and 6 to 9, **characterized in that** it further comprises maturation of the separated α-type calcium sulphate hemihydrate so as to provide a β-type calcium sulphate dihydrate.

11. The process according to any one of claims 1 to 10, **characterized in that** digestion and conversion take place in separate reactors.
